# EUROPEAN PATENT SPECIFICATION

(11) **EP 3 412 689 B1**
(45) Date of publication and mention of the grant of the patent: **14.10.2020**
(21) Application number: 17747334.5
(22) Date of filing: 27.01.2017
(51) Int. Cl.: C08F 8/46, C08F 8/04, C08L 53/02, B32B 17/10, C08F 297/04, C08K 3/22, C08K 3/38, C08K 5/29

(54) **HYDROGENATED BLOCK-COPOLYMER HAVING ACID ANHYDRIDE GROUP AND USE THEREOF**
HYDRIERTES BLOCKCOPOLYMER MIT SÄUREANHYDRIDGRUPPE UND VERWENDUNG DAVON
COPOLYMÈRE SÉQUENCÉ HYDROGÉNÉ COMPORTANT GROUPE ANHYDRIDE D'ACIDE ET SON UTILISATION

(30) Priority: 02.02.2016 JP 2016018251
(43) Date of publication of application: 12.12.2018
(73) Proprietor: Zeon Corporation, Tokyo 100-8246 (JP)
(72) Inventor: KAMIMURA Haruki, Tokyo 100-8246 (JP); KOIDE Yohei, Tokyo 100-8246 (JP); CHIBA Daido, Tokyo 100-8246 (JP); KOHARA Teiji, Tokyo 100-8246 (JP)
(74) Representative: Hansen, Norbert
(86) International application number: PCT/JP2017/003064
(87) International publication number: WO 2017/135177

(56) References cited:
- WO-A1-2012/096281
- WO-A1-2013/176258
- JP-A- S61 247 646
- JP-A- S63 109 049
- JP-A- S63 254 119
- JP-A- 2008 045 074
- JP-A- 2014 047 350
- JP-A- 2016 108 220
- US-A1- 2009 270 556
- US-A1- 2014 066 578

## Description

### TECHNICAL FIELD

The present invention relates to a hydrogenated block copolymer having an acid anhydride group, a resin composition including a hydrogenated block copolymer having the acid anhydride group, a sheet made of the resin composition, and a laminated glass in which the resin sheet is interposed between glass plates through an adhesive and the laminate including the glass plates and the resin sheet is adhesively integrated.

### BACKGROUND ART

A laminated glass having a heat ray-shielding function is useful as a window glass for an automobile, a building or the like because it prevents incidence of heat ray, enhances a cooling effect in summer, and is also effective for energy saving (Patent Literatures 1 to 3).

As the laminated glass having a heat ray-shielding function, (a) a glass having a structure that a multilayer coating of a metal/metal oxide is provided as a heat ray-reflecting film on a surface of a glass plate by vapor deposition, sputtering or the like; (b) a glass having a structure that a transparent film having a multilayer coating of a metal/metal oxide as a heat ray-reflecting film is inserted between glass plates through an adhesive; (c) a glass having a structure that a sheet made of a resin composition (resin composition sheet) containing a metal particulate or metal oxide particulate reflecting or absorbing infrared ray, and/or a near infrared ray-absorbing pigment is inserted between glass plates; and the like are known.

Among them, the methods of forming the heat ray-reflecting film on a substrate by vapor deposition, sputtering or the like in (a) and (b) are not industrially advantageous because their products become expensive. On the other hand, the method using the resin composition sheet having the heat ray-shielding function in (c) is excellent in mass productivity and industrially advantageous in that the resin composition sheet can be continuously produced by a melt extrusion method or the like and the laminated glass in which the resin composition sheet is inserted between the glass plates through an adhesive can also be produced by an ordinary process for producing a laminated glass.

As for the method (c), Patent Literature 4 discloses an intermediate film for a laminated glass in which a metal oxide particulate having a heat ray-shielding function is blended into a polyvinyl acetal resin (hereinafter referred to as "PVB" in some cases). In addition, Patent Literatures 5 and 6 disclose intermediate films for laminated glasses in which a pigment absorbing light at a near-infrared region is blended into a PVB.

However, since the intermediate films described in these documents use PVBs having high hygroscopicity, the laminated glass prepared by bonding this intermediate film has not necessarily have sufficient durability in that water permeates from the end portion of the glass, a peripheral portion readily whitens, and an adhesiveness of the peripheral portion with the glass is decreased when used under a hot and humid environment or used for a long time. In addition, the intermediate film using a PVB has a problem, in production, that a moisture content in an intermediate film must be strictly controlled before bonded with the glass to control its adhesiveness with the glass

### (Non-Patent Literature 1).

In addition, Patent Literature 7 discloses a laminated glass which is excellent in durability and can maintain a heat insulation property for a long time by using an intermediate film made of a resin composition in which an near infrared ray-absorbing organic pigment is dispersed in a thermoplastic resin having a low content of hydroxyl groups such as a PVB, a (meth)acrylic resin, an ethylene/vinyl acetate copolymer resin and an ionomer resin.

However, in some cases, even the intermediate film made of the resin composition disclosed in this document has not necessarily have sufficient durability.

On the other hand, Patent Literature 8 discloses that a hydrogenated aromatic polymer including an acid anhydride group has excellent toughness and high heat distortion temperature. Also, this Patent Literature describes a composition blended with a fibrous inorganic filler such as a glass fiber.

However, this document describes that it is intended to maintain toughness, heat distortion temperature and physical properties under high temperature but does not describe whether or not a metal oxide particulate having a heat ray-shielding function can be highly dispersed.

### CITATION LIST

### PATENT LITERATURE

Patent Literature 1: JP-A-56-32352
Patent Literature 2: JP-A-63-134232
Patent Literature 3: JP-A-7-157344
Patent Literature 4: JP-A-2001-302288
Patent Literature 5: JP-A-2012-66954
Patent Literature 6: JP-A-2013-209234
Patent Literature 7: JP-A-2011-42552
Patent Literature 8: WO 01/070833 (US 2002/0002233A1)

Patent Literature 9: US2009270556 which discloses a block copolymer or hydrogenated product thereof having a polymer block A and a polymer block B, wherein the polymer block A mainly comprises an aromatic vinyl compound unit and the aromatic vinyl compound unit contains a styrene unit in which an alkyl group having at least one functional group selected from a carboxyl group and a group derived therefrom is bound to a benzene ring; and the polymer block B mainly comprises a conjugated diene unit.

### NON-PATENT LITERATURE

Non-Patent Literature 1: Yasuyuki Fujisaki, Japan Chemical Industry Association monthly, 35 (10), 28 (1982)

### SUMMARY OF INVENTION

### TECHNICAL PROBLEM

The present invention has been made under such circumstances of the prior art, and objects of the present invention is to provide a resin composition that has an excellent heat insulating function and is suitable as an intermediate film-forming material for a laminated glass excellent in moisture resistance and durability; a resin sheet made of the resin composition; and a laminated glass in which the resin sheet is interposed between glass plates through an adhesive and the laminate including the glass plates and the resin sheet is adhesively integrated.

### SOLUTION TO PROBLEM

As a result of intensive studies to achieve the above objects, the present inventors have found that a resin composition prepared by blending a particular amount of a metal oxide particulate and/or a near infrared-absorbing pigment having an infrared-shielding function into a modified hydrogenated block copolymer in which an acid anhydride group is introduced into a particular hydrogenated block copolymer is excellent in transparency, and that the laminated glass in which the sheet made of the resin composition is interposed between glass plates through an adhesive and the sheet and the plates are adhesively integrated is excellent in heat ray reflecting function, moisture resistance and durability, and this finding has led to the completion of the invention.

Consequently, aspects of the invention provide a modified hydrogenated block copolymer (E) of (1) to which an acid anhydride group is introduced, resin compositions of (2) to (4), a resin sheet of (5) made of the resin composition, and a laminated glass of (6) using the resin sheet, described below.
(1) A modified hydrogenated block copolymer (E) composed of at least two polymer blocks (A) mainly including an aromatic vinyl compound-derived structural unit and at least one polymer block (B) mainly including a chain conjugated diene compound-derived structural unit,
   and in which an acid anhydride group is introduced into a hydrogenated block copolymer (D) obtained by hydrogenating 90% or more of carbon-carbon unsaturated bonds on a main chain and a side chain and a carbon-carbon unsaturated bond on an aromatic ring in a block copolymer (C), wherein a ratio of wA and wB (wA:wB) is 30:70 to 55:45 when a weight fraction of the whole polymer block (A) relative to the whole block copolymer (C) is defined as wA, and a weight fraction of the whole polymer block (B) relative to the whole block copolymer (C) is defined as wB.
(2) A resin composition (EC) in which 0.001 to 2.0 parts by weight in total of a metal oxide particulate and/or a near infrared ray-absorbing pigment having a function of shielding infrared ray at any region within a wavelength range of 800 to 2,000 nm are blended into 100 parts by weight of the modified hydrogenated block copolymer (E) according to (1).
   Here, the term "metal oxide particulate and/or near infrared ray-absorbing pigment" refers to any aspect of "metal oxide particulate", "near infrared ray-absorbing pigment", and "metal oxide particulate and near infrared ray-absorbing pigment" (The same applies to the following).
(3) The resin composition (EC) according to (2), wherein the metal oxide particulate having a function of shielding infrared ray is at least one selected from a group consisting of tin oxide, aluminum-doped tin oxide, indium-doped tin oxide, antimony-doped tin oxide, zinc oxide, aluminum-doped zinc oxide, indium-doped zinc oxide, gallium-doped zinc oxide, tin-doped zinc oxide, silicon-doped zinc oxide, titanium oxide, niobium-doped titanium oxide, tungsten oxide, sodium-doped tungsten oxide, cesium-doped tungsten oxide, thallium-doped tungsten oxide and tin-doped indium oxide.
(4) The resin composition (EC) according to (2) or (3), wherein the near infrared-absorbing pigment having the function of shielding infrared ray is at least one selected from a group consisting of a phthalocyanine compound, a naphthalocyanine compound, an immonium compound, a diimmonium compound, a polymethine compound, a diphenylmethane compound, an anthraquinone compound, a pentadiene compound, an azomethine compound and lanthanum hexaboride.
(5) A resin sheet (ES) made of the resin composition (EC) according to any of (2) to (4).
(6) A laminated glass (EG) in which the resin sheet (ES) according to (5) is interposed between glass plates and the laminate including the glass plates and the resin sheet (ES) is adhesively integrated, wherein a light transmittance is 50% or lower at any region within a wavelength range of 800 to 2,000 nm, and a light transmittance at 550 nm is 60% or higher.

### ADVANTAGEOUS EFFECTS OF INVENTION

The aspects of the invention provide the novel hydrogenated block copolymer (E) having an acid anhydride group; the resin composition (EC) that includes the hydrogenated block copolymer having the acid anhydride group, has excellent heat insulating function, and is suitable as a laminated glass intermediate film-forming material excellent in moisture resistance and durability; the resin sheet (ES) made of the resin composition (EC); and the laminated glass in which the resin sheet (ES) is interposed between glass plates through an adhesive and the laminate including the glass plates and the resin sheet is adhesively integrated.

The laminated glass (EG) of the present invention solves problems of the conventional laminated glass having a heat ray-shielding function i.e. problems of moisture resistance and durability, and has low turbidity and excellent appearance characteristics also in a practical aspect.

### DESCRIPTION OF EMBODIMENTS

Hereinafter, the embodiments of the present invention are classified into (1) the modified hydrogenated block copolymer (E), (2) the resin composition (EC), (3) the resin sheet (ES) made of the resin composition (EC), and (4) the laminated glass in which the resin sheet (ES) is laminated, and described in detail.

### (1) Modified hydrogenated block copolymer (E)

The modified hydrogenated block copolymer (E) of the present invention is a polymer in which an acid anhydride group is introduced into the hydrogenated block copolymer (D) obtained by hydrogenating 90% or more of the carbon-carbon unsaturated bonds on the main chain and side chain and the carbon-carbon unsaturated bond on the aromatic ring in the block copolymer (C).

### [Block copolymer (C)]

The block copolymer (C) is a polymer composed of at least two polymer blocks (A) mainly including an aromatic vinyl compound-derived structural unit and at least one polymer block (B) mainly including a chain conjugated diene compound-derived structural unit,
wherein a ratio of wA and wB (wA:wB) is 30:70 to 55:45 when the weight fraction of the whole polymer block (A) relative to the whole block copolymer (C) is defined as wA, and the weight fraction of the whole polymer block (B) relative to the whole block copolymer (C) is defined as wB.

The polymer block (A) is a polymer block mainly including a structural unit (a) derived from an aromatic vinyl compound.

The content of the structural unit (a) in the polymer block (A) is normally 90 wt% or more, preferably 95 wt% or more, and more preferably 99 wt% or more. If the content of the structural unit (a) in the polymer block (A) is too small, the heat resistance of the resin composition (EC) possibly decreases.

The polymer block (A) may include components other than the structural unit (a). Examples of the other components include a structural unit (b) derived from a chain conjugated diene and/or a structural unit derived from another vinyl compound (hereinafter referred to as "structural unit (j)" in some cases).

The content of the unit is normally 10 wt% or less, preferably 5 wt% or less, and more preferably 1 wt% or less based on the polymer block (A).

If the content of the structural unit (b) and/or the structural unit (j) in the polymer block (A) is too large, the heat resistance of the resin composition (EC) possibly decreases.

Each of the plural polymer blocks (A) included in the block copolymer (C) may be the same as or different from each other as long as they meet the above range.

The polymer block (B) is a polymer block mainly including a structural unit (b) derived from a chain conjugated diene compound.

The content of the structural unit (b) in the polymer block (B) is normally 70 wt% or more, preferably 80 wt% or more, and more preferably 90 wt% or more.

When the content of the structural unit (b) in the polymer block (B) is within the above range, the resin composition (EC) is preferred because the resin composition (EC) has flexibility and the laminated glass (EG) in which the formed resin sheet (ES) is laminated between the glass plates is preferred because of its good thermal shock resistance and piercing resistance.

The polymer block (B) may include components other than the structural unit (b). Examples of the other components include a structural unit (a) derived from an aromatic vinyl compound and/or a structural unit (j) derived from another vinyl compound.

The content of the unit is normally 30 wt% or less, preferably 20 wt% or less, and more preferably 10 wt% or less based on the polymer block (B).

If the content of the structural unit (a) and/or the structural unit (j) in the polymer block (B) is too large, flexibility of the resin composition (EC) is impaired and when using the formed sheet (ES) as an intermediate film, the thermal shock resistance and the piercing resistance of the obtained laminated glass (EG) may be impaired.

When the block copolymer (C) has a plurality of polymer blocks (B), each of the polymer blocks (B) may be the same as or different from each other.

Examples of the aromatic vinyl compound include styrene; styrenes having an alkyl group having 1 to 6 carbon atoms as a substituent, such as α-methylstyrene, 2-methylstyrene, 3-methylstyrene, 4-methylstyrene, 2,4-diisopropylstyrene, 2,4-dimethylstyrene, 4-t-butylstyrene, 5-t-butyl-2-methylstyrene; styrenes having an alkoxy group having 1 to 6 carbon atoms as a substituent, such as 4-methoxystyrene; styrenes having an aryl group as a substituent, such as 4-phenylstyrene; vinylnaphthalenes such as 1-vinylnaphthalene and 2-vinylnaphthalene; and the like. Above all, the aromatic vinyl compounds including no polar group such as styrene and the styrenes having an alkyl group having 1 to 6 carbon atoms as a substituent are preferred from the viewpoint of hygroscopicity, and styrene is particularly preferred because it is industrially available with ease.

Examples of the chain conjugated diene-based compound include 1,3-butadiene, isoprene, 2,3-dimethyl-1,3-butadiene, 1,3-pentadiene and the like. Above all, the chain conjugated diene-based compound including no polar group is preferred from the viewpoint of hygroscopicity, and the 1,3-butadiene and isoprene are particularly preferred because they are industrially available with ease.

Examples of other vinyl-based compounds include a chain vinyl compound, a cyclic vinyl compound, an unsaturated cyclic acid anhydride, an unsaturated imide compound and the like. These compounds may have a substituent such as a nitrile group, an alkoxycarbonyl group, a hydroxycarbonyl group and a halogen atom. Above all, the compounds including no polar group such as: a chain olefin having 2 to 20 carbon atoms such as ethylene, propylene, 1-butene, 1-pentene, 1-hexene, 1-heptene, 1-octene, 1-nonene, 1-decene, 1-dodecene, 1-eicosen, 4-methyl-1-pentene and 4,6-dimethyl-1-heptene; a cycloolefin having 5 to 20 carbon atoms such as vinylcyclohexane and norbornene; and a cyclodiene compound such as 1,3-cyclohexadiene and norbornadiene, are preferred from the viewpoint of hygroscopicity.

The block copolymer (C) is composed of at least two polymer blocks (A) and at least one polymer block (B). The number of the polymer blocks (A) in the block copolymer (C) is normally 3 or less, preferably 2 or less, and the number of the polymer blocks (B) in the block copolymer (C) is normally 2 or less, preferably 1.

When the numbers of the polymer blocks (A) and the polymer blocks (B) in the block copolymer (C) is large, phase separation between the hydrogenated polymer block derived from the polymer block (A) (hereinafter referred to as "hydrogenated polymer block (Ah)" in some cases) and the hydrogenated polymer block derived from the polymer block (B) (hereinafter referred to as "hydrogenated polymer block (Bₕ)" in some cases) is indistinct in the hydrogenated block copolymer (D) obtained by hydrogenating the block copolymer (C), a glass transition temperature on the high temperature side based on the hydrogenated polymer block (Ah) (hereinafter referred to as "Tg₂" in some cases) decreases, and thus the heat resistance of the resin composition (EC) according to one embodiment of the invention possibly decreases.

The block form of the block copolymer (C) is not particularly limited, and it may be a chain-type block or a radial-type block, but a chain-type block is preferred because of excellent mechanical strength.

The most preferred forms of the block copolymer (C) are a triblock copolymer (A)-(B)-(A) in which the polymer blocks (A) bind to both ends of the polymer block (B), and a pentablock copolymer (A)-(B)-(A)-(B)-(A) in which the polymer blocks (B) bind to both ends of the polymer block (A) and furthermore the polymer blocks (A) respectively bind to the other ends of the both polymer blocks (B).

In addition, when the weight fraction of the whole polymer block (A) relative to the block copolymer (C) is defined as wA, and the weight fraction of the whole polymer block (B) relative to the block copolymer (C) is defined as wB, a ratio of wA and wB (wA:wB) is 30:70 to 55:45, preferably 35:65 to 53:47, and more preferably 40:60 to 50:50.

If wA is too high, the obtained resin composition has high heat resistance but has low flexibility, and in a case of a laminated glass using a resin sheet made of the resin composition as an intermediate film material, the glass is readily broken by low temperature thermal shock. On the other hand, if wA is too low, the heat resistance of the resin composition possibly decreases.

The molecular weight of the block copolymer (C) refers to a weight average molecular weight (Mw) in terms of polystyrene determined by gel permeation chromatography (GPC) using tetrahydrofuran (THF) as a solvent, and is normally 40,000 to 200,000, preferably 45,000 to 150,000, and more preferably 50,000 to 100,000. In addition, the molecular weight distribution (Mw/Mn) of the block copolymer (C) is preferably 3 or less, more preferably 2 or less, and particularly preferably 1.5 or less. When Mw and Mw/Mn are within the above ranges, the heat resistance and the mechanical strength of the resin composition (EC) and/or the sheet (ES) made of the (EC) according to embodiments of the invention are improved.

A method for producing the block copolymer (C) is not particularly limited. For example, methods described in WO 2003/018656 brochure, WO 2011/096389 brochure and the like can be adopted.

### [Hydrogenated block copolymer (D)]

The hydrogenated block copolymer (D) is prepared by hydrogenating the carbon-carbon unsaturated bonds on the main chain and the side chain and the carbon-carbon unsaturated bond on the aromatic ring in the block copolymer (C). Its hydrogenation ratio is normally 90% or higher, preferably 97% or higher, and more preferably 99% or higher.

The higher the hydrogenation ratio is, the better the weather resistance, heat resistance and transparency of the formed article are.

The hydrogenation ratio of the hydrogenated block copolymer (D) can be determined by measuring ¹H-NMR of the hydrogenated block copolymer (D).

The hydrogenation method, the reaction form and the like of the unsaturated bond are not particularly limited and may comply with a known method, but a hydrogenation method in which the hydrogenation ratio can be increased and the polymer chain-cleaving reaction is reduced is preferred. Examples of such a hydrogenation method may include methods described in WO 2011/096389 brochure, WO 2012/043708 brochure and the like.

After completion of the hydrogenation reaction, the hydrogenation catalyst, or the hydrogenation catalyst and polymerization catalyst can be removed from the reaction solution, and then the hydrogenated block copolymer (D) can be collected from the resulting solution. The form of the collected hydrogenated block copolymer (D) is not limited, but the copolymer is normally formed into a pellet, which can be subjected to the subsequent introduction reaction of the acid anhydride group.

The molecular weight of the hydrogenated block copolymer (D) refers to a weight average molecular weight (Mw) in terms of polystyrene determined by GPC using THF as a solvent, and is normally 40,000 to 200,000, preferably 45,000 to 150,000, and more preferably 50,000 to 100,000. In addition, the molecular weight distribution (Mw/Mn) of the hydrogenated block copolymer (D) is preferably 3 or less, more preferably 2 or less, and particularly preferably 1.5 or less. When Mw and Mw/Mn are within the above ranges, the heat resistance and the mechanical strength of the resin composition according to one embodiment of the invention are improved.

### [Modified hydrogenated block copolymer (E)]

The modified hydrogenated block copolymer (E) according to one embodiment of the invention is a polymer in which an acid anhydride group is introduced into the hydrogenated block copolymer (D).

The method for obtaining the modified hydrogenated block copolymer (E) according to one embodiment of the invention is not particularly limited. For example, the modified hydrogenated block copolymer (E) can be obtained by grafting the hydrogenated block copolymer (D) with an unsaturated carboxylic anhydride in the presence of an organic peroxide to introduce an acid anhydride group.

The acid anhydride group may be introduced into the hydrogenated block copolymer (D), so that the dispersibility of the metal oxide particulate in the resin composition blended with the metal oxide particulate can be enhanced.

The unsaturated carboxylic anhydride used for the grafting reaction is not particularly limited, as long as it grafts with the hydrogenated block copolymer (D) to introduce the acid anhydride group into the hydrogenated block copolymer (D).

Examples of the unsaturated carboxylic anhydride include maleic anhydride, citraconic anhydride, itaconic anhydride, 2,3-dimethyl maleic anhydride, 5-norbornene-2,3-dicarboxylic anhydride, allylsuccinic anhydride, 2-phenylmaleic anhydride, cis-aconitic anhydride and the like. Above all, maleic anhydride, itaconic anhydride and 5-norbornene-2,3-dicarboxylic anhydride are suitably used from the viewpoint of industrial availability. Each of these unsaturated carboxylic anhydrides may be used either alone or in combination of two or more kinds.

As the organic peroxide used for the grafting reaction, one having a one-minute half-life temperature of 170 to 190°C is preferably used.

As the organic peroxide, for example, t-butylcumyl peroxide, dicumyl peroxide, di-t-hexyl peroxide, 2,5-dimethyl-2,5-di-(t-butylperoxy) hexane, di-t-butylperoxide, di-(2-t-butylperoxyisopropyl) benzene and the like are preferably used.

Each of these peroxides may be used either alone or in combination of two or more kinds.

The amount of the acid anhydride group introduced into the hydrogenated block copolymer (D) is normally 0.01 to 10 parts by weight, preferably 0.1 to 7 parts by weight, and more preferably 0.3 to 4 parts by weight based on 100 parts by weight of the hydrogenated block copolymer (D).

If the amount of the introduced acid anhydride group is too large, a hygroscopicity of the resulting modified hydrogenated block copolymer (E) is increased, and problems such as corrosion of metal components, functional elements and the like tend to occur, depending on the application of the laminated glass having laminated functional elements or the like. On the other hand, if the amount of the introduced acid anhydride group is too small, an effect of improving the dispersibility of the metal oxide particulate which is blended into the modified hydrogenated block copolymer (E) and has an infrared-shielding function is decreased, and a haze of the formed article is not sufficiently reduced.

The introduction of the acid anhydride group can be confirmed by an IR spectrum. In addition, its introduction amount can be calculated from an absorbance of the IR spectrum.

For the grafting reaction, the unsaturated acid anhydride is normally used in an amount of 0.01 to 10 parts by weight, preferably 0.1 to 7 parts by weight, and more preferably 0.3 to 4 parts by weight based on 100 parts by weight of the hydrogenated block copolymer (D). The peroxide is normally concomitantly used in an amount of 0.05 to 2 parts by weight, preferably 0.1 to 1 part by weight, and more preferably 0.2 to 0.5 part by weight based on 100 parts by weight of the hydrogenated block copolymer (D).

The method of reacting the hydrogenated block copolymer (D) with the unsaturated carboxylic anhydride in the presence of a peroxide is not particularly limited. For example, an acid anhydride group can be introduced into the hydrogenated block copolymer (D) by kneading a mixture composed of the hydrogenated block copolymer (D), an unsaturated carboxylic anhydride and a peroxide in a molten state in a twin-screw kneader for a desired time.

The temperature required for kneading with the twin screw kneader is normally 180 to 220°C, preferably 185 to 210°C, and more preferably 190 to 200°C. In addition, the time required for heating and kneading is normally around 0.1 to 10 minutes, preferably around 0.2 to 5 minutes, and and more preferably around 0.3 to 2 minutes. It is desirable to continuously conduct the kneading and extrusion so that the temperature and the time (detention time) required for heating and kneading are within the above ranges.

The form of the resulting modified hydrogenated block copolymer (E) is not particularly limited, but the copolymer is normally formed into a pellet, which can be subjected to the subsequent forming processing or into which additives can be blended.

The molecular weight of the modified hydrogenated block copolymer (E) is substantially the same as the molecular weight of the hydrogenated block copolymer (D) used as a raw material, because the acid anhydride group is introduced in a small amount. However, since (E) is reacted with the unsaturated carboxylic anhydride in the presence of a peroxide, the crosslinking reaction and the cleavage reaction of the polymers concurrently occur, and the molecular weight distribution value of the modified hydrogenated block copolymer (E) becomes higher.

The molecular weight of the modified hydrogenated block copolymer (E) refers to a weight average molecular weight (Mw) in terms of polystyrene determined by GPC using THF as a solvent, and is normally 40,000 to 200,000, preferably 45,000 to 150,000, and more preferably 50,000 to 100,000. In addition, its molecular weight distribution (Mw/Mn) is preferably 3.5 or less, more preferably 2.5 or less, and particularly preferably 2.0 or less. When Mw and Mw/Mn are within the above ranges, the heat resistance and the mechanical strength of the resin composition (EC) and/or the resin sheet (ES) made of the composition according to one embodiment of the invention can be easily maintained.

### (2) Resin composition (EC)

The resin composition (EC) according to one embodiment of the invention is prepared by blending a metal oxide particulate and/or a near infrared-absorbing pigment having a function of shielding infrared ray at any region within a wavelength range of 800 to 2,000 nm into the modified hydrogenated block copolymer (E).

### (Metal oxide particulate)

The metal oxide particulate has a function of shielding infrared ray at any region within a wavelength range of 800 to 2,000 nm.

Here, "has a function of shielding infrared ray at any region within a wavelength range of 800 to 2,000 nm" means that "the metal oxide particulate to be used has a function of absorbing infrared ray at any region within a wavelength range of 800 to 2,000 nm to resultantly block infrared ray from penetration". The metal oxide particulate to be used may have a maximum absorption wavelength at any region within the wavelength range of 800 to 2,000 nm, or at any region out of the wavelength range of 800 to 2,000 nm.

Examples of the metal oxide particulate include tin oxide particulates such as tin oxide, aluminum-doped tin oxide, indium-doped tin oxide and antimony-doped tin oxide; zinc oxide particulates such as zinc oxide, aluminum-doped zinc oxide, indium-doped zinc oxide, gallium-doped zinc oxide, tin-doped zinc oxide and silicon-doped zinc oxide; titanium oxide particulates such as titanium oxide and niobium-doped titanium oxide; tungsten oxide particulates such as tungsten oxide, sodium-doped tungsten oxide, cesium-doped tungsten oxide, thallium-doped tungsten oxide and rubidium-doped tungsten oxide; indium oxide particulates such as indium oxide and tin-doped indium oxide; and the like.

These metal oxide particulates may be used either alone or in combination of two or more kinds.

The average particle diameter of the metal oxide particulate is normally 0.001 to 0.2 µm, preferably 0.005 to 0.15 µm, and more preferably 0.01 to 0.1 µm. When the average particle diameter is within this range, the transparency at the visible light region can be maintained to provide a more excellent heat ray-shielding property.

In the resin composition (EC), the metal oxide particulate is normally blended in an amount of 0.001 to 1.0 part by weight, preferably 0.002 to 0.5 part by weight, and more preferably 0.005 to 0.3 part by weight based on 100 parts by weight of the modified hydrogenated block copolymer (E). When the blending amount is within this range, the transparency at the visible light region can be maintained to provide a more excellent heat ray-shielding property.

### (Near infrared-absorbing pigment)

The near infrared-absorbing pigment has a function of shielding infrared ray at any region within a wavelength range of 800 to 2,000 nm.

Here, "has a function of shielding infrared ray at any region within a wavelength range of 800 to 2,000 nm" means that "the near infrared-absorbing pigment to be used has a function of absorbing infrared ray at any region within a wavelength range of 800 to 2,000 nm to resultantly block infrared ray from penetration". The near infrared-absorbing pigment to be used may have a maximum absorption wavelength at any region within the wavelength range of 800 to 2,000 nm, or at any region out of the wavelength range of 800 to 2,000 nm.

Examples of the near infrared-absorbing pigment include:
a phthalocyanine compound such as
   4,5-octakis(phenylthio)-3,6-{tetrakis(2,6-dimethylphenoxy)-tetrakis(n-hexylamino)}cop per phthalocyanine, 4,5-octakis(phenylthio)-3,6-(tetrakis(2,6-dimethylphenoxy)-tetrakis(2-ethylhexylamino)}copper phthalocyanine,
   4,5-octakis(4-chlorophenylthio)-3,6-{tetrakis(2,6-dimethylphenoxy)-tetrakis(n-hexylam ino)}copper phthalocyanine,
   4,5-octakis(2-methylphenylthio)-3,6-{tetrakis(2,6-dimethylphenoxy)-tetrakis(n-hexyla mino)}copper phthalocyanine,
   4,5-octakis(4-methoxyphenylthio)-3,6-{tetrakis(2,6-dimethylphenoxy)-tetrakis(n-hexyla mino)}copper phthalocyanine,
   4,5-octakis(phenylthio)-3,6-{tetrakis(2,6-dimethylphenoxy)-tetrakis(3-ethoxypropylami no)}copper phthalocyanine,
   4,5-octakis(5-tert-butyl-2-methylphenylthio)-3,6-{tetrakis(2,6-dimethylphenoxy)-tetraki s(n-hexylamino)}copper phthalocyanine,
   4,5-octakis(2,5-dichlorophenoxy)-3,6-{tetrakis(2,6-dimethylphenoxy)-tetrakis(DL-1-ph enylethylamino)}oxyvanadium phthalocyanine, and
   4,5-octakis(2,5-dichlorophenoxy)-3,6-{tetrakis(2,6-dimethylphenoxy)-tetrakis(benzyla mino)}oxyvanadium phthalocyanine;
a naphthalocyanine compound such as vanadyl-5,14,23,32-tetrakis(4-nitrophenyl)-2,3-naphthalocyaninato, vanadyl-5,14,23,32-tetrakis(4-acetamidophenyl)-2,3-naphthalocyaninato and tetraphenylthiotetrahexyl-1,2-naphthalocyanine vanadyloxy;
an immonium compound such as diimmonium compounds (hexafluorophosphoric
   acid-N,N,N',N'-tetrakis{p-di(cyclohexylmethyl)aminophenyl}-p-phenylene diimmonium, hexafluoro antimonic
   acid-N,N,N',N'-tetrakis{p-di(n-propyl)aminophenyl}-p-phenylene diimmonium, tetrafluoroboric acid-N,N,N',N'-tetrakis{p-di(n-propyl)aminophenyl} -p-phenylene diimmonium tetrafluoroborate, and
   N,N,N',N'-tetrakis(p-di(iso-butyl)aminophenyl)-p-phenylene diimmonium);
a polymethine compound such as 5-anilino-2,3,3-trimethylindolenine,
   5,5'-[(1,2-ethanediyl)bis(oxy)bis(3-methoxy-4,1-phenylene)bis(4-cyano-2,2-dimethyl-4-penten-3-one)],
   5,5'-[(1,3-propanediyl)bis(oxy)bis(3-methoxy-4,1-phenylene)bis(4-cyano-2,2-dimethyl-4-penten-3-one)], 5,5'-[(1,4-butanediyl)bis(oxy)bis(3-methoxy-4,1-phenylene)bis(4-cyano-2,2-dimethyl-4-penten-3 -one)],
   5,5'-[(1,5-pentanediyl)bis(oxy)bis(3-methoxy-4,1-phenylene)bis(4-cyano-2,2-dimethyl-4-penten-3-one)],
   5,5'-[(1,6-hexanediyl)bis(oxy)bis(3-methoxy-4,1-phenylene)bis(4-cyano-2,2-dimethyl-4 -penten-3-one)] and
   5,5'-[(2-butene-1,4-diyl)bis(oxy)bis(3-methoxy-4,1-phenylene)bis(4-cyano-2,2-dimethy l-4-penten-3-one)];
a diphenylmethane compound such as 2,3,4-trioctadecanoxybenzhydrol, [phenyl(2,3,4-trioctadecanoxyphenyl)methyl] amine, 4,4'-didocosoxybenzhydrol, di(4-docosoxyphenyl) methylamine, 4,4-di(12-docosoxydodecyloxy) benzhydrol, amino-bis[4-(12-docosoxydodecyloxy)phenyl] methane, N-benzyl-[bis(4-docosyloxyphenyl)] methylamine,
   (4-methoxy-phenyl)-[4-(3,4,5-tris-octadecyloxy-cyclohexylmethoxy)-phenyl]-methanol, {(4-methoxy-phenyl)-[4-(3,4,5-tris-octadecyloxy-cyclohexylmethoxy)-phenyl]-methyl} -amine, and [bis-(4-docosoxy-phenyl)-methyl]-amine;
an anthraquinone compound such as
   1,4-bis((ethenylphenyl)amino)-9,10-anthraquinone,
   1,8-bis((ethenylphenyl)amino)-9,10-anthraquinone,
   1-((ethenylphenyl)amino)-9,10-anthraquinone,
   1-ethenylphenylamino-4-hydroxy-9,10-anthraquinone,
   1-((ethenylphenyl)amino)-4-((4-methylphenyl)amino)-9,10-anthraquinone,
   1,4-bis((allyloxyethylphenyl)amino)-9,10-anthraquinone,
   1-(allyloxymethylphenyl)amino-4-hydroxy-9,10-anthraquinone,
   1-(allyloxyethylphenyl)amino-4-hydroxy-9,10-anthraquinone,
   1-(4-(2-(allylaminocarbonyloxy)ethyl)phenylamino-4-hydroxyanthraquinone and
   1-(4-(2-methacryloyloxyethyl)phenyl)amino-hydroxy-9,10-anthraquinone;
a pentadiene compound such as
   1,5-bis(4-N,N-dimethylaminophenyl)-1-p-tolylsulfonyl-2,4-trimethylene-2,4-pentadiene,
   1,5-bis(4-N,N-dimethylaminophenyl)-1-phenylsulfonyl-2,4-trimethylene-2,4-pentadiene,
   1,5-bis(4-N,N-dimethylaminophenyl)-3-p-tolylsulfonyl-2,4-trimethylene-1,4-pentadiene,
   1,5-bis(4-N,N-dimethylaminophenyl)-3-phenylsulfonyl-2,4-trimethylene-1,4-pentadien e,
   1,5-bis(4-N,N-diethylaminophenyl)-1-p-tolylsulfonyl-2,4-trimethylene-2,4-pentadiene,
   1,5-bis(4-N,N-diethylaminophenyl)-3-p-tolylsulfonyl-2,4-trimethylene-1,4-pentadiene,
   1,5-bis(4-N,N-dimethylamino-2-methylphenyl)-1-p-tolylsulfonyl-2,4-trimethylene-2,4-pentadiene,
   1,5-bis(4-N,N-dimethylamino-2-methylphenyl)-3-p-tolylsulfonyl-2,4-trimethylene-1,4-pentadiene,
   1,5-bis(4-N,N-dibutylaminophenyl)-1-p-tolylsulfonyl-2,4-trimethylene-2,4-pentadiene, and
   1,5-bis(4-N,N-dibutylaminophenyl)-3-p-tolylsulfonyl-2,4-trimethylene-1,4-pentadiene;
an azomethine compound such as pyrrolopyrimidin-5-one-azomethine, pyrrolopyrimidin-7-one-azomethine and
   (2-hydroxy-N-(2'-methyl-4'-methoxyphenyl)-1-{[4-[(4,5,6,7-tetrachloro-1-oxo-2,3-dihy dro-1H-isoindol-3-ylidene)amino]phenyl]azo}-11H-benzo[a]-carbazole-3-carboxyamid e); lanthanum hexaboride; and the like, for example.

These near infrared-absorbing pigments may be used either alone or in combination of two or more kinds.

In the resin composition (EC) according to one embodiment of the invention, the near infrared-absorbing pigment is normally blended in an amount of 0.001 to 1.0 part by weight, preferably 0.002 to 0.7 part by weight, and more preferably 0.005 to 0.5 part by weight based on 100 parts by weight of the modified hydrogenated block copolymer (E). When the blending amount is within this range, the transparency at the visible light region can be maintained to provide a more excellent heat ray-shielding property.

In the resin composition (EC) according to one embodiment of the invention, it is preferred to blend the metal oxide particulate and the near infrared-absorbing pigment in combination, because infrared ray at a wide wavelength range of 800 to 2,000 nm can be more-efficiently shielded without significantly lowering the light transmittance at the visible light region.

### (Other blending ingredients)

In the present invention, various additives which are generally blended into resins can be blended into the resin composition (EC). Examples of the preferred additives include a softener for adjusting flexibility, reduction in adhesion temperature, adhesiveness with metals and the like, a UV absorber for shielding ultraviolet ray, an antioxidant and an antiblocking agent for enhancing the processability and the like, a light stabilizer for enhancing durability, and the like.

As the softener, a softener which can be homogeneously dissolved or dispersed in the modified hydrogenated block copolymer (E) is preferred, and a hydrocarbon-based polymer having a number average molecular weight of 300 to 5,000 is more preferred.

Specific examples of the hydrocarbon-based polymer include a low-molecular-weight polymer such as polyisobutylene, polybutene, poly-4-methylpentene, poly-1-octene and ethylene/α-olefin copolymer, and a hydrogenated product thereof; a low-molecular-weight polymer such as polyisoprene and polyisoprene/butadiene copolymer, and a hydrogenated product thereof; and the like.

The softener may be used either alone or in combination of two or more kinds. Above all, the low-molecular-weight hydrogenated polyisobutylene (number average molecular weight is preferably 500 to 3,000, and more preferably 500 to 2,500) and the low-molecular-weight hydrogenated polyisoprene (number average molecular weight is preferably 500 to 3,000, and more preferably 500 to 2,500) are preferred in that they can maintain transparency and light resistance and have an excellent softening effect.

The low-molecular-weight hydrocarbon-based polymer is normally blended in an amount of 30 parts by weight or less, preferably 25 parts by weight or less, and more preferably 20 parts by weight or less based on 100 parts by weight of the modified hydrogenated block copolymer (E). If the low-molecular-weight hydrocarbon-based polymer is blended in a larger amount, there are tendencies that when the polymer is used as an intermediate film for a laminated glass, the heat resistance is decreased and the eluate is readily increased.

As the UV absorber, an oxybenzophenone-based compound, a benzotriazole-based compound, a salicylate ester-based compound, a benzophenone-based compound, a benzotriazole-based compound, a triazine-based compound and the like can be used.

As the antioxidant, a phosphorus-based antioxidant, a phenol-based antioxidant, a sulfur-based antioxidant and the like can be used. As the light stabilizer, a hindered amine-based light stabilizer and the like can be used.

The UV absorber, the antioxidant, the antiblocking agent, the light stabilizer and the like blended into the modified hydrogenated block copolymer (E) may be used either alone or in combination of two or more kinds. Each of these additives is normally blended in an amount of 5 parts by weight or less, preferably 2 parts by weight or less, and more preferably 1 part by weight or less based on 100 parts by weight of the modified hydrogenated block copolymer (E).

For a method for producing the resin composition (EC) according to one embodiment of the invention, a known method commonly used as a method for producing a resin composition can be applied. For example, a modified hydrogenated block copolymer (E) pellet, a metal oxide particulate, a near infrared-absorbing pigment, and/or a dispersion of them in an appropriate solvent, and if necessary, other blending ingredients may be uniformly mixed using a mixer such as a tumbler mixer, a ribbon blender, a Henschel type mixer, then melt-mixed by a continuous melt kneader such as a twin screw extruder, and extruded into a pellet form to produce the resin composition (EC).

Further, a resin composition containing a high concentration of a metal oxide particulate and/or a near infrared-absorbing pigment, and if necessary, other blending ingredients (hereinafter, referred to as "master pellet (EC₀)" in some cases) may be prepared in the same manner as described above, and this master pellet (EC₀) may be mixed with the modified hydrogenated block copolymer (E) pellet, melt-mixed by a single screw extruder, a twin screw extruder or the like, and extruded into a pellet form to produce the resin composition (EC).

### (3) Resin sheet (ES)

The resin sheet (ES) according to one embodiment of the invention is made of the resin composition (EC) according to one embodiment of the invention.

That is, the resin sheet (ES) according to one embodiment of the invention is obtained by forming the resin composition (EC) according to one embodiment of the invention, has a light transmittance at a visible light region (at approximately 360 to 800 nm) and has a function of shielding light at an infrared region (at 800 to 2,000 nm).

The sheet (ES) made of the resin composition (EC) according to one embodiment of the invention gains an excellent heat insulation property by shielding infrared ray within a wavelength range of 800 to 2000 nm.

The resin sheet (ES) is obtained by forming the resin composition (ES) according to one embodiment of the invention into a sheet. When the resin sheet (ES) is disposed between two glass plates and integrally bonded through or without an adhesive to prepare a laminated glass, it has, within a range of 800 to 2,000 nm, an area wherein a light transmittance is 50% or lower, preferably 40% or lower, and more preferably 30% or lower, and a light transmittance at a wavelength of 550 nm is 60% or higher, preferably 65% or higher, and more preferably 70% or higher.

The thickness of the resin sheet (ES) is not particularly limited, and can be appropriately selected so as to provide the above-described light transmittances when it is formed into a laminated glass.

The thickness of the resin sheet (ES) is normally 0.1 to 3.0 mm, preferably 0.2 to 2.5 mm, and more preferably 0.3 to 2.0 mm.

A method for preparing the resin sheet (ES) is not particularly limited, and a conventionally known forming method such as a melt extrusion method and a calendaring method can be applied. For example, in the case of forming the resin sheet (ES) by a melt extrusion method, the resin temperature is appropriately selected in a range of normally 170 to 230°C, preferably 180 to 220°C, and more preferably 190 to 210°C. It is preferred that the resin temperature is within the above range, because defects such as orange-peel-like face and die line are unlikely to appear on the surface of the resin sheet (ES) and fluctuation of the sheet thickness is small then.

The surface of the resin sheet (ES) can be a planar shape, an embossed shape or the like. Furthermore, to prevent blocking between the resin sheets (ES), the resin sheet (ES) sheet can be preserved in such a way that one side of the sheet is overlapped with a release film.

Since the resin sheet (ES) according to one embodiment of the invention has light transmittance at the visible light region and heat insulation property similar to a laminated glass, it is also useful as an agricultural sheet, a heat-insulating sheet for glass windows, a roof material for stadiums or the like.

### (4) Laminated glass (EG)

The laminated glass according to one embodiment of the invention is a laminated glass in which the resin sheet (ES) according to one embodiment of the invention is interposed between glass plates and the laminate including the glass plates and the resin sheet (ES) is adhesively integrated, wherein, within a wavelength range of 800 to 2,000 nm, a light transmittance is 50% or lower, preferably 40% or lower, and more preferably 30% or lower at any region and a light transmittance at 550 nm is 60% or higher, preferably 65% or higher, and more preferably 70% or higher.

The laminated glass (EG) according to one embodiment of the invention is a laminated glass in which at least one resin sheet (ES) is interposed between at least two or more glass plates and they are integrally laminated. Although the glass plates and the resin sheet (ES) can be directly brought into contact with each other to form a laminated glass, it is desirable to interpose an adhesion layer between the glass plates and the resin sheet (ES) and laminate them, for maintaining firm adhesiveness between the glass and the resin sheet (ES) when exposed to a hot and humid environment.

The adhesion layer can be made of, for example, an acrylic resin-based adhesive, an α-olefin-based adhesive, an urethane resin-based adhesive, an ethylene-vinyl acetate resin hot-melt adhesive, an epoxy resin-based adhesive, a cyanoacrylate-based adhesive, a silicone-based adhesive, a polyvinyl butyral resin-based adhesive, a hydrogenated block copolymer into which an alkoxysilyl group is introduced, and the like. Among them, it is preferable to use the hydrogenated block copolymer into which an alkoxysilyl group is introduced, described in e.g. WO 2012/043708 brochure, WO 2014/077267 brochure or the like for an adhesion layer, because the resulting laminated glass is excellent in transparency, heat resistance, strong adhesiveness between the glass and the adhesion layer under a hot and humid environment, and the like.

The layer constitution of the laminated glass (EG) according to one embodiment of the invention is not particularly limited. Specifically, constructions having layers laminated in an order of glass plate/resin sheet (ES)/glass plate, glass plate/adhesion layer/resin sheet (ES)/adhesion layer/glass plate, glass plate/adhesion layer/resin sheet (ES)/adhesion layer/functional sheet/adhesion layer/glass plate, glass plate/adhesion layer/resin sheet (ES)/adhesion layer/glass plate/adhesion layer/functional sheet/adhesion layer/glass plate, or the like are exemplified.

Here, examples of the functional sheet include a display element, a light control element, a liquid crystal element, a thermochromic element, a photochromic element, an electrochromic element, a dichroic mirror, an infrared reflection film and the like.

The material of the glass plate to be used is not particularly limited. Examples thereof include aluminosilicate glass, aluminoborosilicate glass, uranium glass, potash glass, silicate glass, crystallized glass, germanium glass, quartz glass, soda glass, lead glass, barium borosilicate glass, borosilicate glass and the like. Also, strengthened glass, chemically strengthened glass and the like can be used.

The thickness of the glass plate to be used is not particularly limited, but is normally around 0.5 to 10 mm. An ultrathin glass plate with a thickness of around 0.05 to 0.5 mm can also be used.

In addition, the thicknesses, the materials and the like of the two or more glass plates used for the laminated glass (EG) may be identical to or different from each other. For example, glass plates with different thicknesses e.g. having a five-layer construction of 2.1 mm thickness glass plate/0.38 mm thickness adhesion layer/0.76 mm thickness sheet (ES)/0.38 mm thickness adhesion layer/0.3 mm thickness sheet glass, can also be used.

The method for producing the laminated glass (EG) is not particularly limited, and a method using an autoclave, a method using a vacuum laminator, and the like can be applied.

Examples of the method include a method that a laminate including first glass plate/adhesive sheet/resin sheet (ES)/adhesive sheet/second glass plate laminated in this order is put in a heat-resistant resin bag capable of depressurization and degasified, and then layers are adhered with each other under heating and pressurization using an autoclave to produce a laminated glass; a method that in a laminate including first glass plate/adhesive sheet/resin sheet (ES)/adhesive sheet/second glass plate laminated in this order, layers are adhered with each other by vacuum press-bonding under heating using a vacuum laminator; and the like.

In the case of using the autoclave, the heating temperature is normally 120 to 150°C and the pressure is 0.3 to 1.1 MPa, and in the case of using the vacuum laminator, the heating temperature is normally 130 to 170°C and the pressure is 0.01 to 0.1 MPa.

The laminated glass (EG) according to one embodiment of the invention is characterized in that the resin sheet (ES) made of the resin composition (EC) in which the transparency is improved by blending the metal oxide particulate and/or the near infrared-absorbing pigment having an infrared-shielding function into the modified hydrogenated block copolymer (E) is used. Even when using the laminated glass (EG) under a hot and humid environment for a long time, defects such as discoloration and whitening of the resin layer between the glasses are rarely caused, because the modified hydrogenated block copolymer (E) has low hygroscopicity and low moisture transmittance.

The laminated glass (EG) according to one embodiment of the invention solves the problem of the conventional laminated glass having the heat ray-shielding function i.e. the problems of moisture resistance and durability, and has an excellent appearance characteristic with low turbidity also in the practical aspect.

Since the laminated glass (EG) according to one embodiment of the invention has transparency at the visible light region and the shielding property at the infrared region, it can achieve both transparency and heat insulation property. Accordingly, it is useful as a window glass for buildings, a glass for roofs, a heat-insulating wall material for rooms, a car windscreen glass, a car sunroof glass, window glasses for railway vehicles and ships, or the like.

### EXAMPLES

The present invention will be described below in more detail with reference to Examples, but the present invention is not limited only to the following examples. Note that the units "parts" and "%" respectively refer to "parts by weight" and "wt%" unless otherwise indicated.

The evaluation in this example was carried out in accordance with the following method.

### (1) Weight average molecular weight (Mw) and molecular weight distribution (Mw/Mn)

The molecular weights of the block copolymer (C), the hydrogenated block copolymer (D) and the modified hydrogenated block copolymer (E) were determined as a value expressed in terms of standard polystyrene determined by GPC by using a THF as an eluate. The GPC measurement was at 38°C. As a measuring apparatus, HLC8020GPC (manufactured by Tosoh Corporation) was used.

### (2) Hydrogenation ratio

The hydrogenation ratios of the main chain, the side chain and the aromatic ring in the hydrogenated block copolymer (D) were calculated by measuring the ¹H-NMR spectrum.

### (3) Whole light transmittance

The whole light transmittance was measured at wavelengths of 550 nm and at the range of 800 to 2,500 nm using an integrating sphere type spectrophotometer (V-670, manufactured by JASCO Corporation).

### (4) Haze

The haze was measured using a haze meter (NDH7000SP, manufactured by NIPPON DENSHOKU INDUSTRIES Co., LTD)

### (5) Moisture resistance

In accordance with a test method JIS R 3212, a test piece of a planar laminated glass (length: 300 mm, width: 300 mm) was placed almost vertically in a thermohygrostat bath at a temperature of 50°C and a relative humidity of 95% RH and preserved for 336 hours, and then its appearance change was visually evaluated.

As results of the visual observation, a case where changes such as crack, expansion, peeling, discoloration, foaming and turbidness were not observed on the test piece was rated as "Good"; a case where crack, expansion and peeling were not observed on the test piece, and discoloration, foaming and turbidness were, even if observed, restricted to an area within 10 mm from the end of the test piece, was rated as "Allowable"; and a case where any of crack, expansion, peeling, discoloration, foaming, turbidness, etc. were observed at an inner area within not less than 10 mm from the end of the test piece, was rated as "Bad".

### (6) Heat resistance

A test piece of a planar laminated glass (length: 300 mm, width: 300 mm) was immersed in a vertical state in boiling water, maintained for 2 hours, and then its appearance change was visually evaluated.

A case where crack, foaming and other defects were not observed on the test piece was rated as "Good"; a case where crack was not observed on the test piece, and foaming and other defects were, even if observed, restricted to an area within 10 mm from the end of the test piece, was rated as "Allowable", and a case where any of crack, foaming and other defects was observed at an inner area within not less than 10 mm from the end of the test piece, was rated as "Bad".

### [Example 1] Production of modified hydrogenated block copolymer (E1) having acid anhydride group

### (1) Production of block copolymer (C1)

400 parts of dehydrated cyclohexane, 10 parts of dehydrated styrene and 0.475 part of dibutyl ether were put in a reactor equipped with a stirrer and whose inside had been sufficiently replaced by nitrogen. 0.88 part of n-butyllithium (15% cyclohexane solution) was added while stirring the whole content at 60°C to start polymerization. Subsequently, while stilling the whole content at 60°C, 15 parts of dehydrated styrene was continuously added into the reactor for 40 minutes to progress the polymerization reaction. After completion of the addition, the whole content was stirred at 60°C for additional 20 minutes while maintaining the state. As a result of measuring the reaction solution by gas chromatography, the polymerization conversion ratio at this time was 99.5%.

Subsequently, 50.0 parts of dehydrated isoprene was continuously added to the reaction solution for 130 minutes, and after completion of the addition, the stirring was continued at 60°C while maintaining the state for 30 minutes. As a result of analyzing the reaction solution by GC at this time, the polymerization conversion ratio was 99.5%.

Subsequently, furthermore 25.0 parts of dehydrated styrene was continuously added to the reaction solution for 70 minutes, and after completion of the addition, it was stirred while maintaining the state for 60 minutes. As a result of analyzing the reaction solution by gas chromatography (GC) at this time, the polymerization conversion ratio was nearly 100%.

Here, 0.5 part of isopropyl alcohol was added to terminate the reaction, to obtain a polymer solution containing an (A)-(B)-(A) type block copolymer (C1). The block copolymer (C1) had a weight average molecular weight (Mw) of 47,200, a molecular weight distribution (Mw/Mn) of 1.04, and wA:wB of 0:50.

### (2) Production of hydrogenated block copolymer (D1)

Subsequently, the polymer solution was transferred to a pressure-resistant reactor equipped with a stirrer, to which 4.0 parts of diatomaceous earth-supported nickel catalyst (product name: "E22U", carrying amount of nickel: 60%, manufactured by JGC Catalysts and Chemicals Ltd.) as a hydrogenation catalyst and 30 parts of dehydrated cyclohexane were added, and mixed. The inside of the reactor was replaced by hydrogen gas, to which hydrogen was further fed while stirring the solution to carry out hydrogenation reaction at a temperature of 190°C and a pressure of 4.5 MPa for 6 hours.

The hydrogenated block copolymer (D1) included in the reaction solution obtained by the hydrogenation reaction had a weight average molecular weight (Mw) of 49,900 and a molecular weight distribution (Mw/Mn) of 1.06.

After completion of the hydrogenation reaction, the reaction solution was filtered to remove the hydrogenation catalyst, and then 2.0 parts of solution prepared by dissolving 0.1 part of pentaerythrityl tetrakis[3-(3,5-di-t-butyl-4-hydroxyphenyl) propionate] (product name: "Songnox 1010", manufactured by Songwon Industrial Co., Ltd.) as a phenol-based antioxidant in 1.9 part of xylene was added, and dissolved.

Subsequently, cyclohexane, xylene and other volatile components were removed from the solution using a cylindrical concentration dryer (product name: "Kontro", manufactured by Hitachi, Ltd.) at a temperature of 260°C and a pressure of 0.001 MPa or lower. The molten polymer was extruded from the die in a strand form, cooled, and then 95 parts of hydrogenated block copolymer (D1) pellet was prepared by a pelletizer.

The resulting pelletized hydrogenated block copolymer (D1) had a weight average molecular weight (Mw) of 49,500, a molecular weight distribution (Mw/Mn) of 1.10, and a hydrogenation ratio of nearly 100%.

### (3) Production of modified hydrogenated block copolymer (E1)

To 100 parts of the resulting hydrogenated block copolymer (D1) pellet, 2.0 parts of maleic anhydride and 0.2 part of 2,5-dimethyl-2,5-di(t-butylperoxy) hexane (product name: "PERHEXA (registered trademark) 25B", manufactured by NOF CORPORATION) were added. Using a twin screw extruder, this mixture was kneaded at a resin temperature of 200°C with a detention time of 60 to 70 seconds, extruded in a strand form, air-cooled, and then cut by a pelletizer to obtain 96 parts of modified hydrogenated block copolymer (E1) pellet having an acid anhydride group.

10 parts of the resulting modified hydrogenated block copolymer (E1) pellet was dissolved in 100 parts of cyclohexane, then poured into 400 parts of dehydrated acetone to coagulate the modified hydrogenated block copolymer (E1), and the coagulate was purified. The coagulate was separated and vacuum-dried at 25°C to isolate 9.0 parts of crumb of the modified hydrogenated block copolymer (E1).

As a result of measuring an FT-IR spectrum for the modified hydrogenated block copolymer (E1), a new absorption band attributed to a -CO-O-CO- group was observed at 1790 cm⁻¹. From the ratio of the absorbance of this absorption band to the absorbance attributed to the C-H bond at 2920 cm⁻¹, it was confirmed that 1.8 parts of maleic anhydride bonded to 100 parts of the hydrogenated block copolymer (D1) on the basis of a calibration curve prepared in advance.

### [Example 2] Production of modified hydrogenated block copolymer (E2) having acid anhydride group

2.0 parts of itaconic anhydride and 0.2 part of 2,5-dimethyl-2,5-di-(t-butylperoxy) hexane were added to 100 parts of the hydrogenated block copolymer (D1) pellet produced in Example 1. Using a twin screw extruder, this mixture was melt-kneaded in the same manner as in Example 1 to obtain 94 parts of modified hydrogenated block copolymer (E2) pellet having an acid anhydride group.

The resulting modified hydrogenated block copolymer (E2) pellet was dissolved, then coagulated and purified to isolate the modified hydrogenated block copolymer (E2) in the same manner as in Example 1.

As a result of measuring an FT-IR spectrum for the modified hydrogenated block copolymer (E2), a new absorption band attributed to a -CO-O-CO- group was observed at 1790 cm⁻¹. From the ratio of the absorbance of this absorption band to the absorbance attributed to the C-H bond at 2920 cm⁻¹, it was confirmed that 1.7 part of itaconic anhydride bonded to 100 parts of the hydrogenated block copolymer (D1) on the basis of a calibration curve prepared in advance.

### [Example 3] Production of resin composition (E1C1), resin sheet (E1S1) and laminated glass (E1G1)

0.25 part of diimmonium salt compound-based near infrared-absorbing pigment (product name: "KAYASORB IRG-022", manufactured by Nippon Kayaku Co.,Ltd.) was added to 100 parts of the modified hydrogenated block copolymer (E1) pellet produced in Example 1, and mixed in a mixer. Using a twin screw extruder equipped with a T die having a width of 400 mm (product name: "TEM-37B", manufactured by TOSHIBA MACHINE CO.,LTD.), this mixture was melt-kneaded under a condition of a cylinder temperature of 200°C and a screw rotation of 150 rpm, and extruded from the T die to prepare a resin sheet (E1S1) with a thickness of 760 µm made of a resin composition (E1C1) in which a near infrared-absorbing pigment was blended into the modified hydrogenated block copolymer (E1).

A test piece with a length of 50 mm and a width of 50 mm was cut out from the resulting resin sheet (E1S1). The difference between the weights measured before and after immersion of the test piece in water at 23°C for 24 hours indicated that a water absorbability of the sheet (E1S1) was 0.01%/24 hours.

A test piece with a length of 290 mm and a width of 290 mm was cut out from the resulting resin sheet (E1S1).

In addition, a sheet with a length of 300 mm and a width of 300 mm was separately cut out from an adhesive sheet with a thickness of 100 µm and made of a hydrogenated styrene/isoprene/styrene block copolymer having an alkoxysilyl group (styrene/isoprene: 50/50 weight ratio, content of alkoxysilyl group: 1.8 wt%, Mw: 39,000) prepared in accordance with the method described in WO 2012/043708 brochure.

Subsequently, between two blue glass plates having a thickness of 1.1 mm, a length of 300 mm and a width of 300 mm, glass plate/adhesive sheet/resin sheet (E1S1)/adhesive sheet/glass plate were laminated in this order to prepare a laminate. When the laminated glass was prepared so that the resin sheet (E1S1) was disposed in the center of the adhesive sheet, the resin sheet (E1S1) was enclosed in the adhesion layers by positioning the all-around margin of the resin sheet (E1S1) inside the margins of the adhesive sheets.

This laminate was put in a bag with a thickness of 75 µm made of NY (nylon)/PP (polypropylene), both sides of the bag were heat-sealed by a heat sealer so that 200 mm width of the central portion on the bag opening was left without seal, and then the opening was heat-sealed while degassing the bag using a sealed packs device (BH-951, manufactured by Panasonic Corporation) to hermetically pack the laminate.

Subsequently, the hermetically packed laminate was put in an autoclave and heated and pressed at a temperature of 140°C and a pressure of 0.8 MPa for 30 minutes to prepare a laminated glass (E1G1).

As a result of visually observing the prepared laminated glass (E1G1), abnormalities such as crack, expansion, peeling, discoloration, foaming and turbidness were not observed, and its appearance was good.

A test piece with a length of 70 mm and a width of 50 mm was cut out from the laminated glass (E1G1) using a glass cutter. The light transmittance of this test piece at a wavelength of 300 to 2500 nm was measured using a spectrophotometer. As a result, the whole light transmittance was 86% at 550 nm, 3% at 1150 nm, and 83% at 2000 nm, indicating that the laminated glass (E1G1) had a preferable light transmittance in the visible region and had a sufficient light shielding property in the near-infrared region. The haze value at 550 nm measured using a haze meter was 0.5%, which was a sufficiently low value.

In addition, as a result of evaluating the moisture resistance and the heat resistance using the laminated glass (E1G1), the moisture resistance was rated as "Good", and also the heat resistance was rated as "Good".

### [Comparative Example 1] Production of resin composition (D1C1) and laminated glass (D1G1) using hydrogenated block copolymer (D1)

A resin sheet (D1S1) made of a resin composition (D1C1) in which the near infrared-absorbing pigment was blended into the hydrogenated block copolymer (D1) was prepared in the same manner as in Example 3, except that 100 parts of the hydrogenated block copolymer (D1) pellet produced in Example 1 was used instead of the modified hydrogenated block copolymer (E1) pellet.

A water absorbability of a resin sheet (D1S1) measured in the same manner as in Example 3 was 0.01%/24 hours.

A laminated glass (D1G1) in which glass plate/adhesive sheet/resin sheet (D1S1)/adhesive sheet/glass plate were laminated in this order was prepared in the same manner as in Example 3 except that the resin sheet (D1S1) was used instead of the resin sheet (E1S1).

As a result of visually observing the prepared laminated glass (D1G1), crack, expansion, peeling, discoloration or foaming were not observed, but turbidness was observed.

The whole light transmittance and the haze value of the laminated glass (D1G1) were measured in the same manner as in Example 3. As a result, the whole light transmittance was 85% at 550 nm, 3% at 1150 nm, and 83% at 2000 nm, and the haze value at 550 nm was 3.2%. The whole light transmittance was nearly equivalent to that in Example 3, but the haze value and the turbidity were higher than those in Example 3.

In addition, as a result of evaluating the moisture resistance and the heat resistance using the laminated glass (D1G1), both of them were rated as "Good".

### [Example 4] Production of resin composition (E1C2) and laminated glass (E1G2)

A resin sheet (E1S2) with a thickness of 760 µm made of a resin composition (E1C2) in which an ATO particulate was blended into the modified hydrogenated block copolymer (E1) was prepared in the same manner as in Example 3, except that 0.2 part of antimony-doped tin oxide (ATO) particulate aqueous dispersion (average particle size: 40 nm, manufactured by Sumitomo Osaka Cement Co., Ltd.) for shielding mid infrared ray was used instead of the near infrared-absorbing pigment.

A water absorbability of the resin sheet (E1S2) measured in the same manner as in Example 3 was 0.01%/24 hours.

A laminated glass (E1G2) in which glass plate/adhesive sheet/resin sheet (E1S2)/adhesive sheet/glass plate were laminated in this order was prepared in the same manner as in Example 3 except that the resin sheet (E1S2) was used instead of the resin sheet (E1S1).

As a result of visually observing the prepared laminated glass (E1G2), abnormalities such as crack, expansion, peeling, discoloration, foaming and turbidness were not observed, and its appearance was good.

The whole light transmittance and the haze value of the laminated glass (E1G2) were measured in the same manner as in Example 3. As a result, the whole light transmittance was 79% at 550 nm, 50% at 1150 nm, and 2% at 2000 nm, and the haze value at 550 nm was 0.4%. The laminated glass had low turbidity and excellent transparency.

In addition, as a result of evaluating the moisture resistance and the heat resistance using the laminated glass (E1G2), both of them were rated as "Good".

### [Comparative Example 2] Production of resin composition (D1C2) and laminated glass (D1G2) using hydrogenated block copolymer (D1)

A resin sheet (D1S2) made of a resin composition (D1C2) in which the ATO particulate was blended into the hydrogenated block copolymer (D1) was prepared in the same manner as in Example 4, except that the hydrogenated block copolymer (D1) pellet produced in Example 1 was used instead of the modified hydrogenated block copolymer (E1) pellet.

A laminated glass (D1G2) in which glass plate/adhesive sheet/resin sheet (D1S2)/adhesive sheet/glass plate were laminated in this order was prepared in the same manner as in Example 3 except that the resin sheet (D1S2) was used instead of the resin sheet (E1S1).

As a result of visually observing the prepared laminated glass (D1G2), crack, expansion, peeling, discoloration and foaming were not observed, but turbidness was observed.

The whole light transmittance and the haze value of the laminated glass (D1G2) were measured in the same manner as in Example 3. As a result, the whole light transmittance was 79% at 550 nm, 49% at 1150 nm, and 4% at 2000 nm, and the haze value at 550 nm was 3.8%. The whole light transmittance was nearly equivalent to that in Example 4, but the haze value and the turbidity were higher than those in Example 4.

In addition, as a result of evaluating the moisture resistance and the heat resistance using the laminated glass (D1G2), both of them were rated as "Good".

### [Example 5] Production of resin composition (E1C3) and laminated glass (E1G3)

A resin sheet (E1S3) with a thickness of 760 µm made of the resin composition (E1C3) in which a near infrared-shielding agent was blended into the modified hydrogenated block copolymer (E1), was prepared in the same manner as in Example 3, except that 0.003 part of lanthanum hexaboride (average particle size: 50 nm, manufactured by Sumitomo Metal Mining Co., Ltd.) for shielding near infrared ray was used instead of the diimmonium salt compound-based near infrared-absorbing pigment used in Example 3.

A water absorbability of the resin sheet (E1S3) measured in the same manner as in Example 3 was 0.01%/24 hours.

A laminated glass (E1G3) in which glass plate/adhesive sheet/resin sheet (E1S3)/adhesive sheet/glass plate were laminated in this order was prepared in the same manner as in Example 3 except that the resin sheet (E1S3) was used instead of the resin sheet (E1S1).

As a result of visually observing the prepared laminated glass (E1G3), abnormalities such as crack, expansion, peeling, discoloration, foaming and turbidness were not observed, and its appearance was good.

The whole light transmittance and the haze value of the laminated glass (E1G3) were measured in the same manner as in Example 3. As a result, the whole light transmittance was 70% at 550 nm, 32% at 1150 nm, and 82% at 2000 nm, and the haze value at 550 nm was 0.5%. The laminated glass had low turbidity and excellent transparency.

In addition, as a result of evaluating the moisture resistance and the heat resistance using the laminated glass (E1G3), both of them were rated as "Good".

### [Example 6] Production of resin composition (E2C2) and laminated glass (E2G2)

A resin sheet (E2S2) with a thickness of 760 µm made of a resin composition (E2C2) in which the ATO particulate was blended into the modified hydrogenated block copolymer (E2) was prepared in the same manner as in Example 4, except that the modified hydrogenated block copolymer (E2) pellet was used instead of the modified hydrogenated block copolymer (E1) pellet.

A water absorbability of the resin sheet (E2S2) measured in the same manner as in Example 3 was 0.01%/24 hours.

A laminated glass (E2G2) in which glass plate/adhesive sheet/resin sheet (E2S2)/adhesive sheet/glass plate were laminated in this order was prepared in the same manner as in Example 3 except that the resin sheet (E2S2) was used instead of the resin sheet (E1S1).

As a result of visually observing the prepared laminated glass (E2G2), abnormalities such as crack, expansion, peeling, discoloration, foaming and turbidness were not observed, and its appearance was good.

The whole light transmittance and the haze value of the laminated glass (E2G2) were measured in the same manner as in Example 3. As a result, the whole light transmittance was 79% at 550 nm, 50% at 1150 nm, and 2% at 2000 nm, and the haze value at 550 nm was 0.4%. The laminated glass had low turbidity and excellent transparency.

In addition, as a result of evaluating the moisture resistance and the heat resistance using the laminated glass (E2G2), both of them were rated as "Good".

### [Comparative Example 3] Production of resin composition (R1C2) and laminated glass (R1G2) using modified ethylene/vinyl acetate copolymer

0.2 part of the same ATO particulate as used in Example 4 was mixed in 100 parts of ethylene/vinyl acetate copolymer (product name: "Evaflex (registered trademark) EV150", vinyl acetate content: 33 wt%, melting point: 61°C, manufactured by DU PONT-MITSUI POLYCHEMICALS CO.,LTD.) pellet. Furthermore, to 100 parts of this mixture, 5.0 parts of triallyl isocyanurate, 1.0 part of 3-methacryloxypropyltrimethoxysilane (trade name: "KBM-503", manufactured by Shin-Etsu Chemical Co., Ltd.) and 0.5 part of dicumyl peroxide (trade name: "PERCUMYL D", manufactured by NOF Corporation) were added and mixed.

Using the same twin screw extruder equipped with the T die as used in Example 3, this mixture was melt-kneaded under a condition of a cylinder temperature of 90°C and a screw rotation of 100 rpm, and extruded from the T die to prepare a resin sheet (R1S2) with a thickness of 760 µm and made of an ethylene/vinyl acetate copolymer resin composition (R1C2) including the ATO particulate.

A water absorbability of the resin sheet (R1S2) measured in the same manner as in Example 3 was 0.11%/24 hours.

The resulting resin sheet (R1S2) was cut into a test piece with a length of 300 mm and a width of 300 mm, and the laminated glass (R1G2) was prepared in the same manner as in Example 3 except that the temperature of the autoclave was 150°C.

As a result of visually observing the prepared laminated glass (R1G2), crack, expansion, peeling, discoloration and foaming were not observed, but turbidness was observed.

The whole light transmittance and the haze value of the laminated glass (R1G2) were measured in the same manner as in Example 3. As a result, the whole light transmittance was 81% at 550 nm, 49% at 1150 nm, and 2% at 2000 nm, and the haze value at 550 nm was 4.0%. The whole light transmittance was nearly equivalent to that in Example 4, but the haze value and turbidity were higher than those in Example 4.

In addition, the moisture resistance and the heat resistance of the laminated glass (R1G2) were evaluated. In the evaluation of the moisture resistance, the test piece did not have crack, expansion, peeling, discoloration and foaming, but cloudiness occurred in an area within about 20 mm from the end of the laminated glass, and the moisture resistance was rated as "Bad". On the other hand, in the evaluation of the heat resistance, the test piece did not have crack, expansion, peeling, discoloration and foaming, and cloudiness occurred in an area within 10 mm from the end of the laminated glass, and thus the heat resistance was rated as "Allowable".

The results of these examples and comparative examples indicate the followings.

The hydrogenated block copolymer (D) obtained by hydrogenating the carbon-carbon unsaturated bonds on the main chain and the side chain and the carbon-carbon unsaturated bond on the aromatic ring is reacted with an unsaturated acid anhydride in the presence of an organic peroxide to obtain the modified hydrogenated block copolymer (E) into which an acid anhydride group is introduced (Examples 1 and 2).

The laminated glass (EG) prepared by using, as an intermediate film component, the resin sheet (ES) made of the resin composition (EC) in which the metal oxide particulate and/or the near infrared-absorbing pigment having a function of shielding infrared ray at any region within a wavelength range of 800 to 2,000 nm are blended into the modified hydrogenated block copolymer (E) to which the acid anhydride group according to one embodiment of the invention is introduced has good light transmittance at the visible light, and sufficient light shielding property at near infrared and/or mid infrared regions, and good moisture resistance and heat resistance (Examples 3 to 6).

When using the hydrogenated block copolymer (D) before modification instead of the modified hydrogenated block copolymer (E), the laminated glass (DG) prepared by using, as an intermediate film component, the resin sheet (DS) made of the resin composition (DC) in which the metal oxide particulate and/or the near infrared-absorbing pigment having a function of shielding infrared ray at any region within a wavelength range of 800 to 2,000 nm are blended has high turbidity in the visible light region, and its appearance is not good (Comparative Examples 1 and 2).

The laminated glass (R1G2) prepared by using, as an intermediate film, the resin sheet (R1S2) made of the resin composition (R1C2) in which the metal oxide particulate is blended into the EVA which is a resin having a higher water absorbability compared to that of the modified hydrogenated block copolymer (E), has good light transmittance at the visible light and sufficient light shielding property in the mid infrared region, but has poor moisture resistance (Comparative Examples 3).

### INDUSTRIAL APPLICABILITY

One aspect of the invention can provide a laminated glass (EG) which is good in moisture resistance and heat resistance, excellent in appearance with low turbidity and has a heat insulating function by using, as an intermediate film material for a laminated glass, the resin sheet (EG) made of the resin composition (EC) in which the metal oxide particulate and/or the near infrared-absorbing pigment having a function of shielding infrared ray is blended into the particular modified hydrogenated block copolymer (E) to which an acid anhydride group is introduced.

## Claims

1. A modified hydrogenated block copolymer in which an acid anhydride group is introduced into a hydrogenated block copolymer obtained by hydrogenating 90% or more of carbon-carbon unsaturated bonds on a main chain and a side chain and a carbon-carbon unsaturated bond on an aromatic ring in a block copolymer composed of at least two polymer blocks (A) mainly including an aromatic vinyl compound-derived structural unit and at least one polymer block (B) mainly including a chain conjugated diene compound-derived structural unit, wherein
a ratio of wA and wB (wA:wB) is 30:70 to 55:45 when a weight fraction of the whole polymer block (A) relative to the whole block copolymer is defined as wA, and a weight fraction of the whole polymer block (B) relative to the whole block copolymer is defined as wB.

2. A resin composition in which 0.001 to 2.0 parts by weight in total of a metal oxide particulate and/or a near infrared ray-absorbing pigment having a function of shielding infrared ray at any region within a wavelength range of 800 to 2,000 nm are blended into 100 parts by weight of the modified hydrogenated block copolymer according to claim 1.

3. The resin composition according to claim 2, wherein the metal oxide particulate having a function of shielding infrared ray is at least one selected from a group consisting of tin oxide, aluminum-doped tin oxide, indium-doped tin oxide, antimony-doped tin oxide, zinc oxide, aluminum-doped zinc oxide, indium-doped zinc oxide, gallium-doped zinc oxide, tin-doped zinc oxide, silicon-doped zinc oxide, titanium oxide, niobium-doped titanium oxide, tungsten oxide, sodium-doped tungsten oxide, cesium-doped tungsten oxide, thallium-doped tungsten oxide and tin-doped indium oxide.

4. The resin composition according to claim 2 or 3, wherein the near infrared-absorbing pigment having the function of shielding infrared ray is at least one selected from a group consisting of a phthalocyanine compound, a naphthalocyanine compound, an immonium compound, a diimmonium compound, a polymethine compound, a diphenylmethane compound, an anthraquinone compound, a pentadiene compound, an azomethine compound and lanthanum hexaboride.

5. A resin sheet made of the resin composition according to any of claims 2 to 4.

6. A laminated glass in which the resin sheet according to claim 5 is interposed between glass plates and the laminate including the glass plates and the resin sheet is adhesively integrated,
wherein a light transmittance is 50% or lower at any region within a wavelength range of 800 to 2,000 nm, and a light transmittance at 550 nm is 60% or higher.

## Patentansprüche

1. Ein modifiziertes hydriertes Blockcopolymer in welchem eine Säureanhydridgruppe in ein hydriertes Blockcopolymer eingeführt ist, erhalten durch Hydrieren von 90% oder mehr der ungesättigten Kohlenstoff-Kohlenstoffbindungen auf einer Hauptkette und einer Seitenkette, und einer ungesättigten Kohlenstoff-Kohlenstoffbindung auf einem aromatischen Ring in einem Blockcopolymer zusammengesetzt aus mindestens zwei Polymerblöcken (A) hauptsächlich umfassend eine von aromatischer Vinylverbindung abgeleitete Struktureinheit und mindestens einen Polymerblock (B) hauptsächlich umfassend eine Kette aus von konjugierter Dien-Verbindung abgeleiteter Struktureinheit, wobei
ein Verhältnis von wA und wB (wA:wB) 30:70 bis 55:45 ist, wenn ein Massenanteil des gesamten Polymerblocks (A) relativ zum gesamten Blockcopolymer als wA definiert ist, und ein Massenanteil des Gesamtpolymerblocks (B) relativ zum Gesamtblockcopolymer als wB definiert ist.

2. Eine Kunststoffzusammensetzung in welcher insgesamt 0,001 bis 2,0 Gewichtsteile eines Metalloxidpartikelmaterials und/oder eines Nahinfrarotstrahlung absorbierenden Pigments mit einer Funktion des Abschirmens von Infrarotstrahlung bei jedem Bereich mit einem Wellenlängenbereich von 800 bis 2000 nm, eingemischt in 100 Gewichtsteile des modifizierten hydrierten Blockcopolymer gemäß Anspruch 1.

3. Die Kunststoffzusammensetzung nach Anspruch 2, wobei das Metalloxidpartikelmaterial mit einer Funktion des Abschirmens von Infrarotstrahlung mindestens eines ist, das ausgewählt ist aus der Gruppe bestehend aus Zinnoxid, Aluminium-dotiertem Zinnoxid, Indium-dotiertem Zinnoxid, Antimon-dotiertem Zinnoxid, Zinkoxid, Aluminium-dotiertem Zinkoxid, Indium-dotiertem Zinkoxid, Gallium-dotiertem Zinkoxid, Zinn-dotiertem Zinkoxid, Silizium-dotiertem Zinkoxid, Titanoxid, Niob-dotiertem Titanoxid, Wolframoxid, Natrium-dotiertem Wolframoxid, Cäsium-dotiertem Wolframoxid, Thallium-dotiertem Wolframoxid und Zinn-dotiertem Indiumoxid.

4. Die Kunststoffzusammensetzung gemäß Anspruch 2 oder 3, wobei das Nahinfrarot absorbierende Pigment mit der Funktion des Abschirmens von Infrarotestrahlung mindestens eines ist, das ausgewählt ist aus der Gruppe bestehend aus einer Phthalocyaninverbindung, einer Naphthalocyaninverbindung, einer Immoniumverbindung, einer Diimmoniumverbindung, einer Polymethinverbindung, einer Diphenylmethanverbindung, einer Anthrachinonverbindung, einer Pentadienverbindung, einer Azomethinverbindung und Lanthanhexaborid.

5. Ein Kunststoffblatt hergestellt aus der Kunststoffzusammensetzung gemäß einem der Ansprüche 2 bis 4.

6. Ein laminiertes Glas in welchem das Kunststoffblatt gemäß Anspruch 5 zwischen Glasplatten angeordnet ist und das Laminat umfassend die Glasplatten, und verklebt integriert das Kunststoffblatt,
wobei eine Lichttransmission bei 50% oder weniger liegt in jedem Bereich innerhalb eines Wellenlängenbereichs von 800 bis 2000 nm, und eine Lichttransmission bei 550 nm bei 60% oder mehr liegt.

## Revendications

1. Copolymère séquencé hydrogéné modifié dans lequel un groupe anhydride d'acide est introduit dans un copolymère séquencé hydrogéné obtenu par hydrogénation de 90 % ou plus des liaisons carbone-carbone insaturées sur une chaîne principale et une chaîne latérale et une liaison carbone-carbone insaturée sur un cycle aromatique dans un copolymère séquencé composé d'au moins deux blocs de polymère (A) comprenant principalement un motif structural dérivé de composé vinylique aromatique et d'au moins un bloc de polymère (B) comprenant principalement un motif structural dérivé de composé diène conjugué de chaîne, dans lequel
un rapport de wA et wB (wA:wB) est 30:70 à 55:45 lorsqu'une fraction en poids du bloc de polymère (A) total par rapport au copolymère séquencé total est défini comme étant wA, et une fraction en poids du bloc de polymère (B) total par rapport au copolymère séquencé total est défini comme étant wB.

2. Composition de résine dans laquelle 0,001 à 2,0 parties en poids au total de particules d'oxyde métallique et/ou d'un pigment absorbant un rayonnement infrarouge proche ayant une fonction de protection contre le rayonnement infrarouge dans une région quelconque dans une plage de longueur d'onde de 800 à 2 000 nm sont mélangées dans 100 parties en poids du copolymère séquencé hydrogéné modifié selon la revendication 1.

3. Composition de résine selon la revendication 2, dans laquelle les particules d'oxyde métallique ayant une fonction de protection contre le rayonnement infrarouge sont au moins l'un choisi dans un groupe constitué des oxyde d'étain, oxyde d'aluminium-étain dopé, oxyde d'indium-étain dopé, oxyde d'antimoine-étain dopé, oxyde de zinc, oxyde d'aluminium-zinc dopé, oxyde d'indium-zinc dopé, oxyde de gallium-zinc dopé, oxyde d'étain-zinc dopé, oxyde de silicium-zinc dopé, oxyde de titane, oxyde de niobium-titane dopé, oxyde de tungstène, oxyde de sodium-tungstène dopé, oxyde de césium-tungstène dopé, oxyde de thallium-tungstène dopé et oxyde d'étain-indium dopé.

4. Composition de résine selon la revendication 2 ou 3, dans lequel le pigment absorbant un rayonnement infrarouge proche ayant la fonction de protection contre le rayonnement infrarouge est au moins l'un choisi dans un groupe constitué d'un composé de phtalocyanine, un composé de naphtalocyanine, un composé d'immonium, un composé de diimmonium, un composé de polyméthine, un composé de diphénylméthane, un composé d'anthraquinone, un composé de pentadiène, un composé d'azométhine et l'hexaborure de lanthane.

5. Feuille de résine constituée de la composition de résine selon l'une quelconque des revendications 2 à 4.

6. Verre feuilleté dans lequel la feuille de résine selon la revendication 5 est intercalée entre des plaques de verre et le stratifié comprenant les plaques de verre et la feuille de résine est intégré de façon adhésive, dans lequel une transmittance optique est 50 % ou moins dans une région quelconque dans une plage de longueur d'onde de 800 à 2 000 nm, et une transmittance optique à 550 nm est 60 % ou plus.
